# EUROPÄISCHE PATENTANMELDUNG

(11) **EP 4 191 182 A1**
(43) Veröffentlichungstag der Anmeldung: **07.06.2023**
(21) Anmeldenummer: 22209110.0
(22) Anmeldetag: 23.11.2022
(51) Int. Cl.: F27B 9/10, F26B 21/02, F27B 9/24, F27B 9/30, C04B 33/32

(54) **VERFAHREN ZUM BETREIBEN EINES TUNNELOFENS**

(30) Priorität: 01.12.2021 AT 509622021
(71) Anmelder: Wienerberger AG, 1100 Wien (AT)
(72) Erfinder: BOOT, Erik, 6717 VW Ede (NL); VOGT, Stefan, 99423 Weimar (DE)
(74) Vertreter: Gibler & Poth Patentanwälte KG

(57) **Zusammenfassung**

Bei einem Verfahren zum Betreiben eines Tunnelofens (1), wobei wenigstens ein Formlingstapel (2) mittels einer Transportvorrichtung (3) durch den Tunnelofen (1) bewegt wird, wobei der Tunnelofen (1) von einem Gasstrom entgegengesetzt zu der Transportrichtung der Transportvorrichtung (3) durchströmt wird, wobei der Gasstrom zumindest teilweise durch Strömungskanäle (4) des wenigstens einen Formlingstapels (2) strömt, wobei in Transportrichtung betrachtet zwischen dem Umriss des wenigstens einen Formlingstapels (2) und einer Tunnelofeninnenwandung (5) ein Randspalt (6) ausgebildet wird, wird vorgeschlagen, dass die mittlere Breite des Randspalts (6) in wenigstens einem Abschnitt des Tunnelofens (1) maximal 80 mm breit ist.

## Beschreibung

Die Erfindung betrifft ein Verfahren zum Betreiben eines Tunnelofens gemäß dem Oberbegriff des Patentanspruches 1.

Es ist bekannt, dass bei der Ziegelproduktion Ziegelformlinge in einem Tunnelofen gebrannt werden. Die Ziegel werden dabei auf Tunnelofenwägen durch den Tunnelofen bewegt, wobei die Ziegelformlinge zuerst in einer Vorwärmzone des Tunnelofens aufgeheizt, anschließend in einem Brennbereich des Tunnelofens gebrannt und einen an den Brennbereich anschließenden Kühlbereich des Tunnelofens gekühlt werden. Weiters ist bekannt, dass bei derartigen Tunnelöfen Luft im Gegenstromprinzip durch die Tunnelöfen strömt.

Nachteilig bei derartigen Tunnelöfen ist, dass bei diesen eine schlechte Wärmeübertragung zwischen der Luft in den Tunnelöfen und den Ziegelformlingen gegeben ist, wodurch derartige Tunnelöfen nicht energieeffizient betrieben werden können. Um bei derartigen Tunnelöfen die Wärmeübertragung auf die Ziegelformlinge zu verbessern ist bekannt, dass bei derartigen Tunnelöfen die Luft in den Tunnelöfen häufig umgewälzt wird, wobei dennoch ein hoher Anteil an Restwärme ungenutzt bleibt. Dieser Anteil an Restwärme, welche durch eine schlechte Wärmeübertragung der Luft bei der Trocknung bzw. bei dem Brennen der Ziegelformlinge übrigbleibt, kann dadurch ungenutzt aus den Tunnelöfen entweichen, wodurch der Betrieb derartiger Tunnelöfen ineffizient ist.

Aufgabe der Erfindung ist es daher ein Verfahren der eingangs genannten Art anzugeben, mit welchem die genannten Nachteile vermieden werden können, mit welchem ein Tunnelofen energieeffizient betrieben werden kann.

Erfindungsgemäß wird dies durch die Merkmale des Patentanspruches 1 erreicht.

Dadurch ergibt sich der Vorteil, dass durch die verringerte mittlere Breite des Randspalts in wenigstens einem Abschnitt des Tunnelofens gegenüber herkömmlichen Tunnelöfen die Wärmeübertragung auf die Formlinge deutlich verbessert wird, insbesondere da der Gasstrom vermehrt durch die Strömungskanäle in dem wenigstens einen Formlingstapel strömt. Dadurch, dass der Gasstrom vermehrt durch die Strömungskanäle in dem wenigstens einen Formlingstapel strömt, wird eine im Wesentlichen bessere Wärmeübertragung von dem Gasstrom auf die Formlinge des wenigstens einen Formlingstapel erreicht. Durch die verbesserte Wärmeübertragung auf die Formlinge kann die Effizienz des Tunnelofens bzw. des Brennvorgangs der Formlinge deutlich verbessert werden. Dadurch kann eine gleiche Menge an Formlingen in einem kleineren Tunnelofen, welcher mit dem vorgeschlagenen Verfahren betrieben wird, schneller gebrannt werden als in einem größeren herkömmlich betriebenen Tunnelofen. Dadurch kann die Baugröße eines Tunnelofens, welcher mit dem vorgeschlagenen Verfahren betrieben wird, reduziert werden, wodurch die Baukosten des Tunnelofens und die betriebsbedingten laufenden Kosten des Tunnelofens reduziert werden können. Durch die verbesserte Wärmeübertragung auf die Formlinge des wenigstens einen Formlingstapels ergibt sich weiters der Vorteil, dass ein heißer Gasstrom seine Energie viel schneller und gleichmäßiger an die Formlinge des wenigstens einen Formlingstapels abgeben kann, wodurch in Transportrichtung betrachtet an dem Tunnelende des Tunnelofens zumindest ein Großteil der Energie des heißen Gasstroms an die Formlinge abgegeben wurde.

Die Erfindung betrifft weiters ein Tunnelofensystem zum Brennen wenigstens eines Stapels Formlinge, gemäß dem Patentanspruch 13.

Die Erfindung hat daher weiters die Aufgabe ein Tunnelofensystem der eingangs genannten Art anzugeben, mit welchem die genannten Nachteile vermieden werden können, mit welchem ein Tunnelofen energieeffizient betrieben werden kann und die Brennzeit von zu brennenden Formlinge reduziert wird.

Erfindungsgemäß wird dies durch die Merkmale des Patentanspruches 13 erreicht.

Die Vorteile des Tunnelofensystems entsprechen den Vorteilen des oben genannten Verfahrens.

Die Unteransprüche betreffen weitere vorteilhafte Ausgestaltungen der Erfindung.

Ausdrücklich wird hiermit auf den Wortlaut der Patentansprüche Bezug genommen, wodurch die Patentansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste bevorzugte Ausführungsform eines Tunnelofens in Frontansicht,
Fig. 2 einen Schnitt entlang der Schnittlinie B - B aus Fig. 1,
Fig. 3 das Detail A aus Fig. 1,
Fig. 4 eine zweite bevorzugte Ausführungsform eines Tunnelofens in Frontansicht,
Fig. 5 einen Schnitt entlang der Schnittlinie B - B aus Fig. 4,
Fig. 6 das Detail A aus Fig. 4,

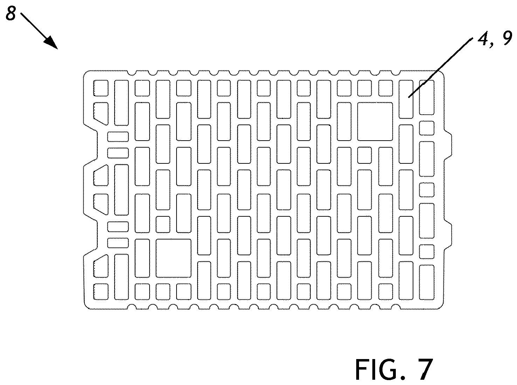

Fig. 7 eine bevorzugte Ausführungsform der Formlinge.

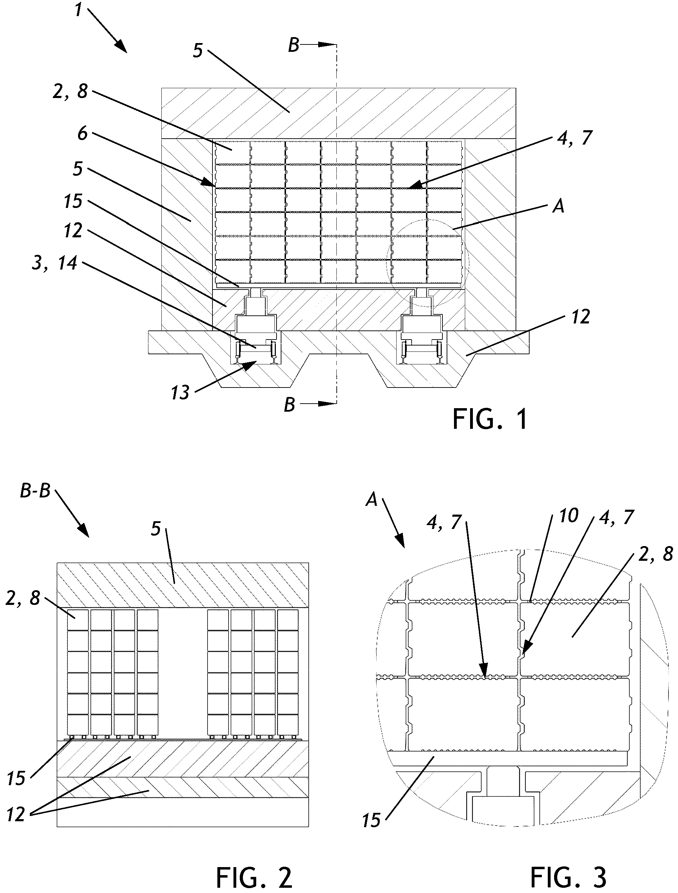

Die Fig. 1 bis 6 zeigen zumindest Teile zweier bevorzugten Ausführungsformen eines Tunnelofens 1, welche betrieben werden nach einem Verfahren zum Betreiben eines Tunnelofens 1, wobei wenigstens ein Formlingstapel 2 mittels einer Transportvorrichtung 3 durch den Tunnelofen 1 bewegt wird, wobei der Tunnelofen 1 von einem Gasstrom entgegengesetzt zu der Transportrichtung der Transportvorrichtung 3 durchströmt wird, wobei der Gasstrom zumindest teilweise durch Strömungskanäle 4 des wenigstens einen Formlingstapels 2 strömt, wobei in Transportrichtung betrachtet zwischen dem Umriss des wenigstens einen Formlingstapels 2 und einer Tunnelofeninnenwandung 5 ein Randspalt 6 ausgebildet wird, wobei die mittlere Breite des Randspalts 6 in wenigstens einem Abschnitt des Tunnelofens 1 maximal 80 mm breit ist.

Dadurch ergibt sich der Vorteil, dass durch die verringerte mittlere Breite des Randspalts 6 in wenigstens einem Abschnitt des Tunnelofens 1 gegenüber herkömmlichen Tunnelöfen die Wärmeübertragung auf die Formlinge 8 deutlich verbessert wird, insbesondere da der Gasstrom vermehrt durch die Strömungskanäle 4 in dem wenigstens einen Formlingstapel 2 strömt. Dadurch, dass der Gasstrom vermehrt durch die Strömungskanäle 4 in dem wenigstens einen Formlingstapel 2 strömt, wird eine im Wesentlichen bessere Wärmeübertragung von dem Gasstrom auf die Formlinge 8 des wenigstens einen Formlingstapel 2 erreicht. Durch die verbesserte Wärmeübertragung auf die Formlinge 8 kann die Effizienz des Tunnelofens 1 bzw. des Brennvorgangs der Formlinge 8 deutlich verbessert werden. Dadurch kann eine gleiche Menge an Formlingen 8 in einem kleineren Tunnelofen, welcher mit dem vorgeschlagenen Verfahren betrieben wird, schneller gebrannt werden als in einem größeren herkömmlich betriebenen Tunnelofen. Dadurch kann die Baugröße eines Tunnelofens 1, welcher mit dem vorgeschlagenen Verfahren betrieben wird, reduziert werden, wodurch die Baukosten des Tunnelofens 1 und die betriebsbedingten laufenden Kosten des Tunnelofens 1 reduziert werden können. Durch die verbesserte Wärmeübertragung auf die Formlinge 8 des wenigstens einen Formlingstapels 2 ergibt sich weiters der Vorteil, dass ein heißer Gasstrom seine Energie viel schneller und gleichmäßiger an die Formlinge 8 des wenigstens einen Formlingstapels 2 abgeben kann, wodurch in Transportrichtung betrachtet an dem Tunnelende des Tunnelofens 1 zumindest ein Großteil der Energie des heißen Gasstroms an die Formlinge 8 abgegeben wurde.

Ein Tunnelofen 1 ist ein Ofen, welcher einen Tunnel aufweist, durch welchen der wenigstens eine Formlingstapel 2 bewegt wird. Es ist vorgesehen, dass der wenigstens eine Formlingstapel 2 durch den Tunnel des Tunnelofens 1 mittels der Transportvorrichtung 3 bewegt wird.

Der Tunnelofen 1 umfasst eine Tunnelofeninnenwandung 5.

Bevorzugt umfasst der Tunnelofen 1 zumindest eine Tunnelofendecke und zwei gegenüberliegende Tunnelofenseitenwände.

Bevorzugt kann die Tunnelofeninnenwandung 5 aus der Tunnelofendecke und/oder zumindest eine der zwei gegenüberliegenden Tunnelofenseitenwände ausgebildet sein.

Es kann bevorzugt vorgesehen sein, dass der Tunnelofen 1 eine Vorwärmzone zum Trocknen der Formlinge 8, eine Brennzone zum Brennen der Formlinge 8 und eine Kühlzone zum Kühlen der Formlinge 8 aufweist.

Bevorzugt kann vorgesehen sein, dass in Transportrichtung betrachtet die Formlinge 8 des wenigstens einen Formlingstapel 2 in der Vorwärmzone des Tunnelofens 2 getrocknet werden, anschließend in der Brennzone des Tunnelofens 2 gebrannt werden und in der an der Brennzone des Tunnelofens 2 anschließenden Kühlzone des Tunnelofens 2 gekühlt werden.

Bevorzugt kann der Tunnelofen 1 gerade ausgebildet sein.

Die Formlinge 8 des wenigstens Formlingstapel 2 können insbesondere keramische Formlinge sein, welche in dem Tunnelofen 1 zu Ziegeln gebrannt werden.

Bevorzugt können die Formlinge 8 des wenigstens einen Formlingstapel 2 Formlinge von Mauerziegeln, Klinker, Verblender und/oder Dachziegeln umfassen.

Der Formlingstapel 2 kann insbesondere auch als Stapel Formlinge 2 bezeichnet werden.

Bevorzugt bilden die Formlinge 8 aufeinandergestapelt bzw. übereinandergestapelt den wenigstens einen Formlingstapel 2 aus.

Bevorzugt werden durch das aufeinanderstapeln bzw. übereinanderstapeln der Formlinge 8 Stapelebenen des wenigstens einen Formlingsstapel 2 ausgebildet.

Die Stapelebene kann insbesondere auch als eine Stapelschicht des wenigstens einen Formlingstapel 2 bezeichnet werden.

Bevorzugt umfasst der wenigstens eine Formlingstapel 2 zumindest zwei Stapelebenen Formlinge 8.

Bevorzugt umfasst der wenigstens eine Formlingstapel 2 mehrere Stapelebenen Formlinge 8. In den Fig. 1 und 2 sind beispielhaft die zwei bevorzugten Ausführungsformen des Tunnelofens 1 gezeigt, wobei der Formlingstapel 2 aus sechs Stapelebenen ausgebildet ist.

Bevorzugt sind mehrere Formlingstapel 2 des wenigstens einen Formlingstapel 2 in Transportrichtung betrachtet hintereinander angeordnet. In Fig. 2 ist beispielhaft ein Schnitt entlang der Schnittlinie B-B aus Fig. 1 gezeigt, wobei in dem Tunnelofen 1 jeweils vier hintereinander angeordnete Formlingstapel 2 angeordnet sind, welche voneinander beabstandet angeordnet sind.

Bevorzugt sind zwischen den Stapelebenen des wenigstens einen Formlingsstapel 2 Strömungskanäle 4 ausgebildet.

Bevorzugt werden die Stapelebenen des wenigstens einen Formlingsstapel 2 in von den zwei Tunnelofenseitenwänden begrenzt.

Bevorzugt wird der wenigstens eine Formlingstapel 2 mittels der Transportvorrichtung 3 durch einen Querschnitt des Tunnelofens 1 bewegt, welcher in Transportrichtung betrachtet, von einem Tunnelanfang des Tunnelofens 1 zu einem Tunnelende des Tunnelofens 1 gesehen, frei von festen Hindernissen ist. Dieser Querschnitt kann bevorzugt als lichter Querschnitt des Tunnelofens 1 bezeichnet werden. Der lichte Querschnitt des Tunnelofens 1 ist bevorzugt ein Querschnitt quer zu der Transportrichtung der Transportvorrichtung 3.

Bevorzugt kann sich der lichte Querschnitt des Tunnelofens 1 seitlich von einer Tunnelofenseitenwand zu der gegenüberliegenden Tunnelofenseitenwand erstrecken.

Es ist vorgesehen, dass der Tunnelofen 1, die Transportvorrichtung 3 und wenigstens ein Gebläse zusammen ein Tunnelofensystem bilden.

Die Transportvorrichtung 3 ist eine Vorrichtung, welche dazu in der Lage ist den wenigstens einen Formlingstapel 2 durch den Tunnelofen 1 zu bewegen. Dabei kann bevorzugt vorgesehen sein, dass die Transportvorrichtung 3 Schienen entlang des Tunnelofens 1 umfasst, wobei die Transportvorrichtung 3 auf den Schienen geführt wird.

Es ist vorgesehen, dass die Transportrichtung jene Richtung ist, entlang der wenigstens eine Formlingstapel 2 mittels der Transportvorrichtung 3 bewegt bzw. transportiert wird.

Es ist vorgesehen, dass der Tunnelofen 1 von einem Gasstrom entgegengesetzt zu der Transportrichtung der Transportvorrichtung 3 durchströmt wird. Bevorzugt erzeugt das wenigstens eine Gebläse des Tunnelofensystems den Gasstrom.

Bevorzugt kann vorgesehen sein, dass das wenigstens eine Gebläse lediglich auf einer Seite des Tunnelofens 1 einen Gasstrom entgegengesetzt zu der Transportrichtung der Transportvorrichtung 3 erzeugt.

Bevorzugt kann der Gasstrom ein Luftstrom sein.

Insbesondere kann der Luftstrom von dem wenigstens einen Gebläse erzeugt werden.

Es ist vorgesehen, dass der Gasstrom zumindest teilweise durch Strömungskanäle 4 des wenigstens einen Formlingstapel 2 strömt. Bevorzugt kann der Gasstrom zumindest teilweise durch Strömungskanäle 4 innerhalb des wenigstens einen Formlingstapel 2 strömen. Bevorzugt kann der Gasstrom zumindest teilweise durch Strömungskanäle 4 strömen, welche in Transportrichtung betrachtet innerhalb des Umrisses des wenigstens einen Formlingstapel 2 ausgebildet werden. Dabei kann bevorzugt vorgesehen sein, dass der wenigstens eine Formlingstapel 2 -in Transportrichtung betrachtet - von einer Vorderseite bis zu einer Rückseite des Formlingstapel 2 die Strömungskanäle 4 für den Gasstrom aufweist.

Bevorzugt strömt der Gasstrom zumindest teilweise durch die Strömungskanäle 4, welche Strömungskanäle 4 von der Vorderseite bis zu der Rückseite des wenigstens einen Formlingstapel 2 angeordnet sind.

Bevorzugt ist die Vorderseite des wenigstens einen Formlingstapel 2 in Transportrichtung angeordnet ist.

Bevorzugt ist die Rückseite des wenigstens einen Formlingstapel 2 gegenüberliegend und beabstandet zu der Vorderseite des wenigstens einen Formlingstapel 2 angeordnet.

Bevorzugt kann der Randspalt 6 in Transportrichtung betrachtet zwischen dem Umriss des wenigstens einen Formlingstapel 2 und einer Tunnelofeninnenwandung 5 bei der Bewegung des wenigstens einen Formlingstapel 2 durch den Tunnelofen 1 ausgebildet werden.

Bevorzugt kann der Randspalt 6 in Transportrichtung betrachtet zwischen dem Umriss des wenigstens einen Formlingsapel 2 und den zwei Tunnelofenseitenwänden sowie der Tunnelofendecke ausgebildet werden.

Bevorzugt kann der Umriss des wenigstens einen Formlingstapel 2 auch als Kontur des wenigstens einen Formlingstapel 2 bezeichnet werden.

Bevorzugt ist die mittlere Breite des Randspalts 6 das arithmetische Mittel der Abstände zwischen dem Umriss des wenigstens einen Formlingsstapel 2 und der Tunnelofeninnenwandung 5. Hierbei ist bevorzugt das arithmetische Mittel der Abstände zwischen den Umriss des wenigstens einen Formlingsstapel 2 und der Tunnelofeninnenwandung 5 gemeint, wenn die Abstände umlaufend um den Umriss des wenigstens Formlingstapels 2 und der Tunnelofeninnenwandung 5 gemessen werden. Bevorzugt sind die in dieser Anmeldung vorgeschlagenen maximalen Werte für die mittlere Breite des Randspalts 6 die Werte, welche sich aus dem arithmetischen Mittel bzw. dem arithmetischen Mittelwert der Abstände zwischen dem Umriss des wenigstens einen Formlingstapels 2 und der Tunnelofeninnenwandung 5 in wenigstens einem Abschnitt des Tunnelofens 1 ergeben.

Bevorzugt kann vorgesehen sein, dass umlaufend um den Umriss des wenigstens einen Formingstapels 2 betrachtet der Abstand zwischen den Umriss des wenigstens einen Formlingstapels 2 und der Tunnelofeninnenwandung 5 im Wesentlichen konstant groß.

Alternativ kann vorgesehen sein, dass umlaufend um den Umriss des wenigstens einen Formingstapels 2 betrachtet der Abstand zwischen den Umriss des wenigstens einen Formlingstapels 2 und der Tunnelofeninnenwandung 5 nicht konstant groß ist.

Bevorzugt kann vorgesehen sein, dass die mittlere Breite des Randspalts 6 in dem wenigstens einen Abschnitt des Tunnelofens 1 maximal 70 mm, bevorzugt maximal 50 mm, besonders bevorzugt maximal 30 mm, breit ist. Dadurch ergibt sich der Vorteil, dass der Randspalt 6 möglichst klein gewählt werden kann, wodurch eine möglichst gleichmäßige Durchströmung des wenigstens einen Formlingstapels 2 erreicht werden kann. Dadurch kann eine noch bessere Wärmeübertragung auf den wenigstens einen Formlingstapel 2 erreicht werden, wodurch die Brennzeit der Formlinge 8 reduziert werden kann. Weiters kann dadurch eine möglichst kompakte Baugröße des Tunnelofens 1 erreicht werden.

Bevorzugt kann vorgesehen sein, dass die mittlere Breite des Randspalts 6 in dem wenigstens einen Abschnitt des Tunnelofens 1 mindestens 10 mm, bevorzugt mindestens 15 mm, besonders bevorzugt mindestens 20 mm, breit ist.

Bevorzugt kann vorgesehen sein, dass die Strömungskanäle 4 des wenigstens einen Formlingstapels 2 Spalten 7 zwischen den Formlingen 8 umfassen. Dadurch ergibt sich der Vorteil, dass auch zwischen den Formlingen 8 eine bessere Wärmeübertragung erreicht werden kann, nachdem der Gasstrom mit mehreren und größeren Flächen des wenigstens einen Formlingstapel 2 in Kontakt gelangen kann.

Besonders bevorzugt kann vorgesehen sein, dass der wenigstens eine Formlingstapel 2 Beabstandungen zwischen den Formlingen 8 umfasst.

Insbesondere können die Beabstandungen zwischen den Formlingen 8 des wenigstens einen Formlingstapel 2 die Spalten 7 zwischen den Formlingen 8 sein.

Bevorzugt kann vorgesehen sein, dass die mittlere Breite der Spalten 7 zwischen den Formlingen 8 maximal 20 mm, bevorzugt maximal 15 mm, besonders bevorzugt maximal 12 mm, beträgt. Dadurch ergibt sich der Vorteil, dass der Abstand der Formlinge 8 auf den wenigstens einen Formlingstapel 2 genau vorgegeben werden kann, wodurch die Menge des Gasstrom, welche durch die Spalten 7 der Formlinge 8 strömt, an die Menge des Gasstroms, welche durch den Randspalt 6 strömt, angepasst werden kann.

Bevorzugt kann vorgesehen sein, dass die mittlere Breite der Spalten 7 zwischen den Formlingen 8 mindestens 2 mm, bevorzugt mindestens 4 mm, besonders bevorzugt mindestens 6 mm, beträgt.

Bei der ersten bevorzugten Ausführungsform des Tunnelofens 1 kann bevorzugt vorgesehen sein, dass die mittlere Breite der Spalten 7 zwischen den Formlingen 8 das arithmetische Mittel der Abstände aller Formlinge 8 des wenigstens einen Formlingstapel 2 zueinander ist. Diese bevorzugte Ausführungsform des Tunnelofens 1 mit den Spalten 7 zwischen den Formlingen 8 ist beispielhaft in den Fig. 1 bis 3 dargestellt.

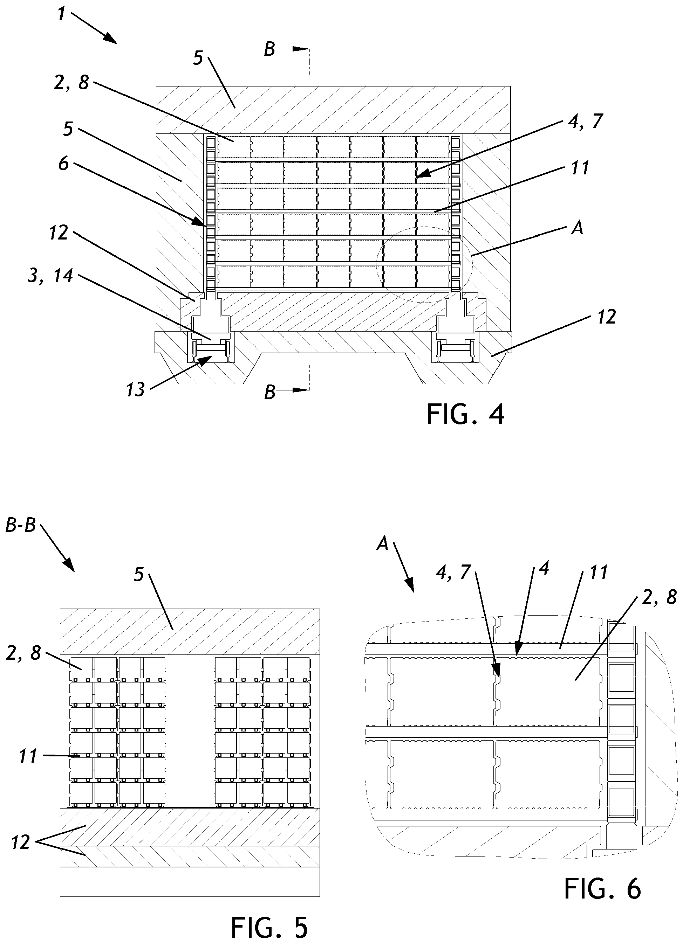

Bei der zweiten bevorzugten Ausführungsform des Tunnelofens 1 umfassend zumindest eine Brennkassetten 11 kann bevorzugt vorgesehen sein, dass die mittlere Breite der Spalten 7 zwischen den Formlingen 8 das arithmetische Mittel aller Abstände zwischen den Formlingen 8 auf den Stapelebenen des wenigstens einen Formlingstapel 2 ist. Diese bevorzugte Ausführungsform des Tunnelofens 1 umfassend die zumindest eine Brennkassette und den Spalten 7 zwischen den Formlingen 8 ist beispielhaft in den Fig. 4 bis 6 dargestellt.

Besonders bevorzugt kann der Gasstrom zumindest teilweise durch die Spalten 7 zwischen den Formlingen 8 strömen.

Bevorzugt kann vorgesehen sein, dass die Strömungskanäle 4 des wenigstens einen Formlingstapels 2 Durchbrechungen 9 der Formlinge 8 umfassen, welche Durchbrechungen 9 - in Transportrichtung betrachtet - von einer Vorderseite bis zu einer Rückseite der Formlinge 8 verlaufen. Dadurch ergibt sich der Vorteil, dass eine noch bessere Wärmeübertragung auf die Formlinge 8 des wenigstens einen Formlingstapel 2 erreicht wird, nachdem der Gasstrom auch durch die Durchbrechungen 9 der Formlinge 8 strömen kann.

Besonders bevorzugt kann der Gasstrom zumindest teilweise durch die Durchbrechungen 9 der Formlinge 8 strömen.

Bevorzugt kann vorgesehen sein, dass alle Formlinge 8 des wenigstens einen Formlingstapels 2 Durchbrechungen 9 aufweisen. Dadurch ergibt sich der Vorteil, dass der Wärmeübertrag auf die Formlinge 8 noch gleichmäßiger durchgeführt werden kann, weil der Gasstrom durch die Durchbrechungen 9 aller Formlinge 8 strömen kann.

Besonders bevorzugt sind die Durchbrechungen 9 aller Formlinge 8 in Transportrichtung angeordnet.

Bevorzugt kann vorgesehen sein, dass die Formlinge 8 des wenigstens einen Formlingstapel 2 mittels Abstandshaltern 10 voneinander beabstandet angeordnet sind. Dadurch ergibt sich der Vorteil, dass der Abstand zwischen den Formlingen 8 genau eingestellt werden kann. Dadurch kann eine konstanter Abstand zwischen den Formlingen 8 auf dem wenigstens einen Formlingstapel 2 erhalten werden.

Bevorzugt kann vorgesehen sein, dass die Abstandshalter 10 zwischen den Formlingen 8 des wenigstens einen Formlingstapels 2 bei der Fertigung der Formlinge 8 angeordnet werden. Dadurch ergibt sich der Vorteil, dass die Anordnung der Abstandshalter 10 bei der Stapelung der Formlinge 8 entfallen kann, weil die Formlinge 8 bereits bei der Fertigung die Abstandshalter 10 erhalten. Weiters kann dadurch kann der Abstand zwischen den Formlingen 8 innerhalb des wenigstens einen Formlingstapel 2 schnell und einfach ausgebildet werden.

Besonders bevorzugt kann vorgesehen sein, dass die Abstandshalter 10 gleichzeitig mit den Formlingen 8 bei der Fertigung der Formlinge 8 hergestellt und/oder angeordnet werden.

Bevorzugt kann vorgesehen sein, dass die Abstandshalter 10 gleichzeitig mit den Formlingen 8 durch Extrusion geformt werden. Dadurch ergibt sich der Vorteil, dass die Produktion der Abstandshalter 10 und der Formlinge 8 sowie die Anordnung der Abstandshalter 10 an den Formlingen 8 gleichzeitig passieren kann. Dadurch kann der Herstellungsschritt der Formlinge 8 und die Ausbildung der Spalten 7 zwischen den Formlingen 8 schnell und einfach durchgeführt werden.

Besonders bevorzugt kann vorgesehen sein, dass die Formlinge 8 und die Abstandshalter 10 mittels eines Mundstückes eines Extruders bei der Extrusion geformt werden.

Bevorzugt kann vorgesehen sein, dass die Abstandshalter 10 aus dem Material der Formlinge 8 gefertigt werden. Dadurch ergibt sich der Vorteil, dass eine unerwünschte Wechselwirkung zwischen den Abstandshaltern 10 und den Formlingen 8 verhindert werden kann.

Bevorzugt kann vorgesehen sein, dass die Formlinge 8 des wenigstens einen Formlingstapel 2 auf zumindest einer Brennkassette 11 angeordnet werden. Dadurch ergibt sich der Vorteil, dass der Randspalt 6 während des Transport des wenigstens eines Formlingstapels 2 durch den Tunnelofen 1 konstant gehalten werden kann, nachdem eventuelle Abweichungen bei der Stapelung der Formlinge 8 entfallen.

Besonders bevorzugt kann der wenigstens eine Formlingstapel 2 auf der zumindest einen Brennkassette 11 mehrere Stapelebenen umfassen.

Alternativ kann bevorzugt vorgesehen sein, dass die zumindest eine Brennkassette 11 lediglich eine Stapelebene Formlinge 8 umfasst.

Besonders bevorzugt können zwischen den Stapelebenen des wenigstens einen Formlingstapel 2 die Abstandshalter 10 angeordnet sein.

Bevorzugt kann vorgesehen sein, dass die zumindest eine Brennkassette 11 umfassend ein Karbid, insbesondere Siliziumkarbid, ausgebildet ist.

Bevorzugt kann vorgesehen sein, dass die Transportvorrichtung 3 entlang wenigstens zweier Kanäle 13 des Tunnelofens 1 bewegt wird, welche Kanäle 13 entlang des Tunnelofens 1 in einem Tunnelofenboden 12 verlaufen, wobei in den wenigstens zwei Kanälen 13 jeweils zumindest eine Transporteinheit 14 der Transportvorrichtung 3 angeordnet ist, welche mit dem wenigstens einen Formlingstapel 2 zumindest mittelbar verbunden ist. Dadurch ergibt sich der Vorteil, dass der Abstand zwischen den wenigstens einen Formlingstapel 2 zu dem Tunnelofenboden 12 reduziert werden kann, wodurch verhindert werden kann, dass ein Großteil des Gasstroms zwischen den wenigstens einen Formlingstapel 2 und dem Tunnelofenboden 12 durchströmt. Dadurch kann eine bessere Wärmeübertragung auf die Formlinge 8 des wenigstens einen Formlingstapel 2 erreicht werden. Durch die Kanäle kann weiters auch eine im Wesentlichen gasdichte Ausbildung zwischen dem Tunnelofenboden 12 und dem wenigstens einen Formlingstapel 2 erreicht werden. Dadurch kann durch die Kanäle insbesondere ein im Wesentlichen gasdichter Betrieb des Tunnelofens 1 erreicht werden.

Bevorzugt begrenzen der Tunnelofenboden 12, die Tunnelofendecke und die zwei gegenüberliegende Tunnelofenseitenwände des Tunnelofens 1 zusammen einen tunnelartigen Raum begrenzen.

Es kann vorgesehen sein, dass das Tunnelofensystem dazu ausgebildet ist nach dem vorgeschlagenen Verfahren zum Betreiben des Tunnelofens 1 betrieben zu werden.

Bevorzugt kann vorgesehen sein, dass das Tunnelofensystem zum Brennen der Formlinge 8 des wenigstens einen Formlingstapels 2 ausgebildet ist.

Bevorzugt kann vorgesehen sein, dass das Tunnelofensystem eine Transportvorrichtung 3 umfasst, dass in dem Tunnelofenboden 12 wenigstens zwei Kanäle 13 entlang des Tunnelofens 1 angeordnet sind und dass in den wenigstens zwei Kanälen 13 jeweils zumindest eine Transporteinheit 14 der Transportvorrichtung 3 angeordnet ist, welche mit dem wenigstens einem Formlingstapel 2 zumindest mittelbar verbunden ist. Dadurch ergibt sich der Vorteil, dass der Randspalt 6 des wenigstens einen Formlingstapel 2 genau eingestellt werden kann, wodurch eine noch bessere Wärmeübertragung auf die Formling 8 des wenigstens einen Formlingstapel 2 sowie ein noch effizienterer Betrieb des Tunnelofens 1 erreicht werden.

Alternativ kann in dem Tunnelofenboden 12 lediglich ein Kanal 13 entlang des Tunnelofens 1 angeordnet sein, wobei in den lediglich einen Kanal 13 die zumindest eine Transporteinheit 14 der Transportvorrichtung 3 angeordnet ist, welche mit dem wenigstens einem Formlingstapel 2 zumindest mittelbar verbunden ist.

In einer weiteren Alternative können in dem Tunnelofenboden 12 wenigstens drei oder wenigstens vier Kanäle 13 entlang des Tunnelofens 1 angeordnet sein, wobei in jedem Kanal 13 jeweils zumindest eine Transporteinheit 14 der Transportvorrichtung 3 angeordnet ist, welcher mit dem wenigstens einem Formlingstapel 2 zumindest mittelbar verbunden ist.

Bevorzugt erstrecken sich die wenigstens zwei Kanäle 13 entlang einer Längserstreckung des Tunnelofens 1.

Bevorzugt kann die zumindest eine Transporteinheit 14 einen Tunnelofenwagen umfassen. Insbesondere können mehrere Tunnelofenwägen zusammen in jedem Kanal 13 der wenigstens zwei Kanälen 13 einen durchgehenden Zug bilden, welcher von dem Tunnelanfang des Tunnelofens 1 zu dem gegenüberliegenden Tunnelende des Tunnelofens 1 bewegt wird.

Bevorzugt kann vorgesehen sein, dass die Transportvorrichtung 3 zumindest einen Tragbalken 15 umfasst, welcher mit wenigstens einer Transporteinheit 14 eines jeden Kanals 13 zumindest mittelbar verbunden ist.

Bevorzugt kann vorgesehen sein, dass die Formlinge 8 des wenigstens einen Formlingstapel 2 auf den zumindest einen Tragbalken 15 angeordnet werden. In den Fig. 1 bis 3 ist beispielhaft die erste bevorzugt Ausführungsform des Tunnelofens 1 gezeigt, wobei die Formlinge 8 des wenigstens einen Formlingstapel 2 auf den zumindest einen Tragbalken 15 angeordnet sind.

Besonders bevorzugt kann der wenigstens eine Formlingstapel 2 auf dem zumindest einen Tragbalken 15 mehrere Stapelebenen umfassen.

Alternativ kann die zumindest eine Brennkassette 11 mit wenigstens einer Transporteinheit 14 eines jeden Kanals 13 zumindest mittelbar verbunden sein. Hierbei kann die zumindest eine Brennkassette 11 besonders bevorzugt an zwei Enden der Brennkassette 11 auf eine Fixiereinheit der Transportvorrichtung 3 aufgelegt und/oder eingehängt werden. In den Fig. 4 und 6 ist beispielhaft die zweite bevorzugt Ausführungsform des Tunnelofens 1 umfassend die zumindest eine Brennkassette 11 ersichtlich, wobei jeweils eine Stapelebene Formlinge 8 des wenigstens einen Formlingstapel 2 auf einer Brennkassette 11 angeordnet ist, welche Brennkassette 11 in der Fixiereinheit der Transportvorrichtung 3 eingehängt ist.

Bevorzugt kann vorgesehen sein, dass der mittlere hydraulische Durchmesser des Randspalts 6 maximal das 10-fache, besonders bevorzugt maximal das 5-fache, insbesondere maximal das 3-fache, der mittleren hydraulischen Durchmesser der Strömungskanäle 4 ist. Dadurch ergibt sich der Vorteil, dass ein Teil des Gasstroms durch die Strömungskanäle 4 fließt, wodurch eine bessere Wärmeübertragung auf die Formlinge 8 des wenigstens einen Formlingstapel 2 erreicht wird.

Bevorzugt kann vorgesehen sein, dass der mittlere hydraulische Durchmesser des Randspalts 6 maximal das 10-fache, besonders bevorzugt maximal das 5-fache, insbesondere maximal das 3-fache, des kleinsten hydraulischen Durchmessers der Strömungskanäle 4 ist.

Bevorzugt kann vorgesehen sein, dass sich die mittleren hydraulischen Durchmesser der Strömungskanäle 4 untereinander maximal um das 5-fache, besonders bevorzugt maximal um das 3-fache, insbesondere maximal um das 2-fache, unterscheiden. Dadurch ergibt sich der Vorteil, dass die Strömungsgeschwindigkeit des Gasstroms in dem Randspalt 6 im Wesentlichen den Strömungsgeschwindigkeiten des Gasstroms in den Strömungskanälen 4 entspricht. Dadurch kann eine sehr gleichmäßige Wärmeübertragung auf die Formlinge 8 des wenigstens einen Formlingstapel 2 erhalten werden, wodurch der Tunnelofen 1 sehr effizient betrieben werden kann.

Der hydraulische Durchmesser ist dabei eine rechnerische Größe, welche zur Brechung des Durchsatzes durch einen Strömungskanal mit einer beliebigen Querschnitt verwendet werden kann.

Besonders bevorzugt kann der hydraulische Durchmesser aus dem Verhältnis der Querschnittsfläche und dem benetzten Umfang berechnet werden. Hierbei kann der hydraulische Durchmesser viermal das Verhältnis der Querschnittsfläche zu dem benetzten Umfang sein.

Ein derart berechneter hydraulische Durchmesser des Randspalts 6 kann maximal 100 mm, besonders bevorzugt maximal 80 mm, insbesondere maximal 60 mm, groß sein.

Bevorzugt ist der mittlere hydraulische Durchmesser das arithmetische Mittel mehrerer berechneter hydraulischen Durchmesser.

Bevorzugt können mehrere hydraulische Durchmesser berechnet werden, wobei von den berechneten hydraulischen Durchmessern der arithmetische Mittelwert berechnet wird. Bevorzugt ist dieser arithmetische Mittelwert der mittlere hydraulische Durchmesser.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Das Bindewort "oder" ist als inklusiv und nicht als exklusiv zu interpretieren. Sofern es sich aus dem Kontext nicht anders ergibt, umfasst "A oder B" auch "A und B", wobei "A" und "B" beliebige Merkmale darstellen.

Mittels eines ordnenden Zahlwortes, beispielweise "erster", "zweiter" oder "dritter", werden insbesondere ein Merkmal X bzw. ein Gegenstand Y in mehreren Ausführungsformen unterschieden, sofern dies nicht durch die Offenbarung der Erfindung anderweitig definiert wird. Insbesondere bedeutet ein Merkmal X bzw. Gegenstand Y mit einem ordnenden Zahlwort in einem Anspruch nicht, dass eine unter diesen Anspruch fallende Ausgestaltung der Erfindung ein weiteres Merkmal X bzw. einen weiteren Gegenstand Y aufweisen muss.

Ein "im Wesentlichen" in Verbindung mit einem Zahlenwert mitumfasst eine Toleranz von ± 10% um den angegebenen Zahlenwert, sofern es sich aus dem Kontext nicht anders ergibt.

Bei Wertebereichen sind die Endpunkte mitumfasst, sofern es sich aus dem Kontext nicht anders ergibt.

## Patentansprüche

1. Verfahren zum Betreiben eines Tunnelofens (1), wobei wenigstens ein Formlingstapel (2) mittels einer Transportvorrichtung (3) durch den Tunnelofen (1) bewegt wird, wobei der Tunnelofen (1) von einem Gasstrom entgegengesetzt zu der Transportrichtung der Transportvorrichtung (3) durchströmt wird, wobei der Gasstrom zumindest teilweise durch Strömungskanäle (4) des wenigstens einen Formlingstapels (2) strömt, wobei in Transportrichtung betrachtet zwischen dem Umriss des wenigstens einen Formlingstapels (2) und einer Tunnelofeninnenwandung (5) ein Randspalt (6) ausgebildet wird, **dadurch gekennzeichnet, dass** die mittlere Breite des Randspalts (6) in wenigstens einem Abschnitt des Tunnelofens (1) maximal 80 mm breit ist.

2. Verfahren nach Anspruch 1, **dadurch gekennzeichnet, dass** die mittlere Breite des Randspalts (6) in dem wenigstens einen Abschnitt des Tunnelofens (1) maximal 70 mm, bevorzugt maximal 50 mm, besonders bevorzugt maximal 30 mm, breit ist.

3. Verfahren nach Anspruch 1 oder 2, **dadurch gekennzeichnet, dass** die Strömungskanäle (4) des wenigstens einen Formlingstapels (2) Spalten (7) zwischen den Formlingen (8) umfassen.

4. Verfahren nach Anspruch 3, **dadurch gekennzeichnet, dass** die mittlere Breite der Spalten (7) zwischen den Formlingen (8) maximal 20 mm, bevorzugt maximal 15 mm, besonders bevorzugt maximal 12 mm, beträgt.

5. Verfahren nach Anspruch 1 bis 4, **dadurch gekennzeichnet, dass** die Strömungskanäle (4) des wenigstens einen Formlingstapels (2) Durchbrechungen (9) der Formlinge (8) umfassen, welche Durchbrechungen (9) - in Transportrichtung betrachtet - von einer Vorderseite bis zu einer Rückseite der Formlinge (8) verlaufen.

6. Verfahren nach Anspruch 5, **dadurch gekennzeichnet, dass** alle Formlinge (8) des wenigstens einen Formlingstapels (2) Durchbrechungen (9) aufweisen.

7. Verfahren nach einem der Ansprüche 1 bis 6, **dadurch gekennzeichnet, dass** die Formlinge (8) des wenigstens einen Formlingstapel (2) mittels Abstandshaltern (10) voneinander beabstandet angeordnet sind.

8. Verfahren nach Anspruch 7, **dadurch gekennzeichnet, dass** die Abstandshalter (10) zwischen den Formlingen (8) des wenigstens einen Formlingstapels (2) bei der Fertigung der Formlinge (8) angeordnet werden.

9. Verfahren nach Anspruch 7 oder 8, **dadurch gekennzeichnet, dass** die Abstandshalter (10) gleichzeitig mit den Formlingen (8) durch Extrusion geformt werden.

10. Verfahren nach einem der Ansprüche 7 bis 9, **dadurch gekennzeichnet, dass** die Abstandshalter (10) aus dem Material der Formlinge (8) gefertigt werden.

11. Verfahren nach einem der Ansprüche 1 bis 10, **dadurch gekennzeichnet, dass** die Formlinge (8) des wenigstens einen Formlingstapel (2) auf zumindest einer Brennkassette (11) angeordnet werden.

12. Verfahren nach einem der Ansprüche 1 bis 11, **dadurch gekennzeichnet, dass** die Transportvorrichtung (3) entlang wenigstens zweier Kanäle (13) des Tunnelofens (1) bewegt wird, welche Kanäle (13) entlang des Tunnelofens (1) in einem Tunnelofenboden (12) verlaufen, wobei in den wenigstens zwei Kanälen (13) jeweils zumindest eine Transporteinheit (14) der Transportvorrichtung (3) angeordnet ist, welche mit dem wenigstens einen Stapel Formlinge (2) zumindest mittelbar verbunden ist.

13. Tunnelofensystem zum Brennen wenigstens eines Stapels Formlinge (2), **dadurch gekennzeichnet, dass** das Tunnelofensystem dazu ausgebildet ist nach einem Verfahren nach einem der Ansprüche 1 bis 12 betrieben zu werden.

14. Tunnelofensystem nach Anspruch 13, **dadurch gekennzeichnet, dass** das Tunnelofensystem eine Transportvorrichtung (3) umfasst, dass in dem Tunnelofenboden (12) wenigstens zwei Kanäle (13) entlang des Tunnelofens (1) angeordnet sind und dass in den wenigstens zwei Kanälen (13) jeweils zumindest eine Transporteinheit (14) der Transportvorrichtung (3) angeordnet ist, welche mit dem wenigstens einem Stapel Formlinge (2) zumindest mittelbar verbunden ist.
